Europäisches Patentamt

**European Patent Office**

Office européen des brevets

(11) Publication number: **0 080 884**

**A2**

(12) **EUROPEAN PATENT APPLICATION**

(21) Application number: **82306330.0**

(22) Date of filing: **26.11.82**

(51) Int. Cl.³: **G 03 C 5/54**
**G 11 B 7/24**

(30) Priority: **27.11.81 JP 189060/81**

(43) Date of publication of application:
**08.06.83 Bulletin 83/23**

(84) Designated Contracting States:
**DE FR GB**

(71) Applicant: **KONISHIROKU PHOTO INDUSTRY CO. LTD.**
**No. 26-2, Nishishinjuku 1-chome Shinjuku-ku**
**Tokyo 160(JP)**

(72) Inventor: **Shimada, Fumio**
**3-5-20 Kawasaki Hamura-machi**
**Nishitama-gun Tokyo(JP)**

(72) Inventor: **Nishi, Shinichi**
**2-5-19 Owada-cho**
**Hachioji-shi Tokyo(JP)**

(72) Inventor: **Hoga, Kinu**
**5-406, 6498 Hino**
**Hino-shi Tokyo(JP)**

(74) Representative: **Brock, Peter William et al,**
**Michael Burnside & Partners 2 Serjeants' Inn Fleet**
**Street**
**London EC4Y 1HL(GB)**

(54) A recording medium and a method for the production thereof.

(57) A recording medium having a reflective layer (6) on a transparent support (1) can be obtained by physical development of a layer of physical development nuclei (2) in the presence of metal ions. The ions can for instance migrate from a colloid layer of a metal salt (6). The association of developed nuclei, after physical development, results in a reflective layer with metal atoms obtained by reducing the metal ions, whose reflectivity is reduced on irradiation through the transparent support. The manufacture of such recording media does not require vacuum system.

FIG. 5

0080884

## A RECORDING MEDIUM AND A METHOD FOR THE PRODUCTION THEREOF

The invention relates to a recording medium and, more particularly to an optical recording medium capable of being recorded and being read with reflection and to a method for the production thereof.

The media of the invention are used in a system in which an information such as audio and video images is recorded in form of the variations of the configuration or the size of a pit or block, and the information thus recorded is converted into the audio or video signal thereof by picking it up optically to regenerate the information.

As for the recording media of this kind, there have been known such recording media as disclosed in Japanese Patent Publication Open to Public Inspection (hereinafter referred to as Japanese Patent O.P.I. Publication) No. 108995/1980, 33995/1981, 49296/1981, or 49297/1981, in which a photosensitive silver halide emulsion has been used. Such recording media are advantageous in that it is possible to manufacture continuously and the recording energy can be more relatively small, that is different from those comprising Te, TeO, or a chalcogenide compound for which a vacuum instrument should be used in the manufacturing process. The recording media are also advantageous in that a track or some kind of data may be photographically recorded by making good use of the fact that the silver halide
emulsion is photosensitive.  In the techniques disclosed in
the aforesaid patent publications, there have mainly related
to a recording medium of which the surface of the recording
layer coated on a support is reflective.

On the other hand, as for the methods in which a recording
process is carried out through a support by utilizing the reflectivity in the vicinity of the interface between the support
and the recording layer, there have been described thereof in
Japanese Patent O.P.I. Publication No. 49296/1981 and 49297/
1981, wherein nothing has been disclosed about a method or
medium in which the reflectivity of the interface between the
support and recording layer thereof is increased and the practically applicable reflectivity is produced in the vicinity of
the interface therebetween.  There is also the fact that, whenever such a reflectivity is applied to a recording layer in
accordance with the techniques described the aforementioned
publications, the surface of every recording layer becomes more
reflective than the vicinity of the interface.

On the other hand, it is required that a protective layer
made of $SiO_2$, polymethylmethacrylate (PMMA) or the like should
be coated on a recording medium in order to prevent the pits
on the surface of a recording layer from contaminating with
dusts, or that an entire recording medium should be encapsulated.

It will become necessary, therefore, to take such a process

0080884

as that for coating the protective layer, that for the encapsulation, or the like. To avoid such trouble, there has
usually used a method for recording through a transparent support made of PMMA, glass or the like, and in this case there
has been known that two sheets of recording media are used by
overlaying one sheet with the other so that the transparent
supports each thereof may face outside.

It is an object of the invention to provide a recording
medium capable of being recorded, and being read-out and in
which the reflectivity is improved particularly in the vicinity
of the interface between the support and the recording layer
thereof.

Another object of the invention is to provide a recording
medium that may be manufactured continuously without any necessity for using a vacuum system.

A further object of the invention is to provide a recording medium that is easy to be recorded with a small energy
power of an energy beam and is also highly sensitive.

The foregoing and other objects are attained by a recording medium comprising a layer containing a reflective component
provided on a support in which the reflectivity of the layer is
decreased by a irradiation of an energy beam through said support to said layer, said support being transparent to said
energy beam, and said layer being formed by a physical development of a physical development nucleus layer provided on said support and having the transparency to said energy beam of not less than 50% in the presence of metallic ion.

It will do well to take the following process, for example, in order to manufacture a recording medium relating to the invention, in which, to be concrete, firstly a physical development nucleus layer that is substantially transparent to an energy-beam is provided onto a support such as a glass-plate that is transparent to the energy-beam and then the physical development nucleus layer is physically developed, and thus, a layer containing a reflective component, that is, a surface having a reflective metallic luster, is formed.  It is preferable in this case that the layer containing the reflective component, that is, the reflective metallic lustrous surface, is of non-conductive, from the viewpoint of avoiding a thermal diffusion therefrom.  Such a physical development nucleus layer as described above may also be of the relief-pattern for forming tracks.

In the invention, as for the processes for providing a physical development nucleus layer onto a support, there can preferably be adopted such a process as a blade coating, air-knife coating, bar coating, roller coating, curtain coating, spinner coating and the like.  In this case, the thickness of the layer would be in the order of 0.01 - 20 $\mu$ and, more preferably of 0.01 - 0.5 $\mu$, so that the layer may transmit a writing or reading light-beam.

- 5 -                                    0080884

As for the physical development nuclei to be usable in
said physical development nucleus layer of the invention, there
may be given the publicly known physical development nuclei.
For example, there are given a group of sulfides of heavy
metals such as sulfide of zinc, chrome, gallium, iron, cadmium,
cobalt, nickel, lead, antimony, bismuth, silver, cerium,
arsenic, copper or rhodium; and selenides of heavy metals such
as selenide of lead, zinc, antimony or nickel.

As for another group of the useful physical development
nuclei, noble metals such as silver, gold, platinum, palladium,
mercury, and the like are given, and it is preferable that such
a noble metal is contained, in form of a colloidal particle,
in a binder.  Salts of such metals and more preferably a simple
inorganic and easily reducible salt such as silver nitrate, gold
chloride and gold nitrate, are also useful for physical development nuclei.

Other group of the useful physical development nuclei includes thio compound such as silver thioxalate and the lead
and nickel complex salts thereof, and thioacetamide.

For the physical development nucleus layers of the invention, the abovementioned various heavy metals, noble metals,
the sulfides and selenides thereof, and the like may also be
provided onto a support in such a suitable process as a vacuum
evaporation process, sputtering process, CVD process and the
like.  In the vacuum evaporation process, sputtering process, CVD process or the like, the aforementioned physical development nucleus layer may be made extremely thinner, and therefore such processes are advantageous in utilizing effectively the light-energy of a beam for recording. In this case, the thickness of such layer is 5 $\overset{\circ}{A}$ - 1000 $\overset{\circ}{A}$ and more preferably 20 $\overset{\circ}{A}$ - 500 $\overset{\circ}{A}$.

The preferable physical development nuclei are sulfides of heavy metals, for example, sulfides of zinc, cadmium, silver, lead, and the like, and such a metal as silver, gold, palladium, copper, or the like.

As the compounds of metals supplying a metallic ion to the physical development nuclei through a physical development process, a gold salt such as a sodium salt; a copper salt such as $CuCl_2$, CuSCN; a lead salt such as PbO, $PbCl_2$, $PbBr_2$; an iron salt such as an oxalate, a nitrate; a Pd complex salt such as oxalic acid, a malonate, a silver salt such as AgCl, AgBr, AgI, $AgNO_3$, $Ag_2SO_4$, $Ag_2S$; a cobalt salt such as $CoCl_2$, $CoSO_4$; a nickel salt such as $Ni(NO_3)_2$, $NiCl_2$; $HgCl_2$; $BiCl_2$; $TeCl_4$; $InCl_3$; $InBr_3$; and the like; everyone of which may be used, and a silver salt, a copper salt, a nickel salt and a cobalt salt are preferably used in the invention, and most preferably, a silver halide is used therein. In this case, a silver halide also has the advantage of non-pollution.

The physical developments in the invention are processed with a physical developer in a publicly known process. For the physical developers, anyone of the conventional developers may be used, and to be more concrete, the developers are an alkaline or acid solution containing at least a developing agent, and it is possible to use every kind of developers which have been known by person skilled in the art.

Supports to be used in the invention may be any one of the transparent to an energy-beam, and as for the concrete examples thereof, there may be given cellulose triacetate, polyethylene terephthalate, polymethyl methacrylate, polycarbonate, ceramics, polyimide resin, glass plate, a metallic sheet, and the like; and it is preferable that these supports are sublayered. As for the sublayer processors in this case, a silane-coupling reagent, a titanium-coupling reagent or the like may be used, and inter alia the silane-coupling agents described in U.S. Patent No. 3,661,584 are preferably used.

It may also be allowed to apply such a surface treatment as a corona-discharging, plasma-discharging and ion-bombardment, with the purpose of improving the adhesiveness of the support.

`In the invention, when a silver halide emulsion is used for a metallic compound, it is preferable to add therein with an antifoggant, coating assistant, and hardening agent, but it is not always necessary to apply any sensitization treatment because no sensitivity is required for a visible light. It is also possible that a developing agent such as hydroquinone and phenidone is added directly to a silver halide emulsion and the emulsion is then developed with only an alkaline solution containing a silver halide solvent, and thus silver atom is deposited in form of a mirror.

As for the binding agents which may be used in the invention for the physical development nucleus layer or the metallic layer, anyone of the publicly known hydrophilic protective colloids may be used, and as the concrete examples thereof there can be given a gelatin, an alkaline-processed gelatin, an acid-processed gelatin and the derivatives thereof; colloidal albumin; casein; a cellulose derivative such as carboxymethyl cellulose, hydroxyethyl cellulose and the like; a sugar derivative such as sodium alginate, a starch derivative and the like; a synthetic hydrophilic macromolecular substance such as polyvinyl alcohol, poly-N-vinylpyrolidone, a polyacrylic acid copolymer, polyacrylamide and the like. As for the other types of the binding agents, there can be given a phenol resin, an epoxy resin, a melanine resin and the like; the abovegiven binding agents may also be used in combination with two or more kinds thereof if occasion demands. As for the binding agent to be used in the invention, a less-heat-conductive and hydrophilic protective colloid is preferable and a variety of the binding agents within the scope of the abovementioned colloids may be used in the invention.

As for the high density energy-beams for recording a pit information onto a recording medium relating to the invention, anyone of the publicly known may be used and, inter alia, a laser-beam is preferably used. Either of the laser beams of continuous-wave type and pulse-oscillation type may be used. To be more concrete, ruby-laser of 6943Å, argon-ion laser of 4880Å or 5145Å, glass-laser of 1.06 µ, He-Ne-laser of 6328Å, a laser diode and the like, may be given as the example thereof.

It is preferable that the recording media relating to the invention should have the reflectivity of 10 - 70% through a support and more preferably 20 - 60% therethrough from the view point that information must be read-out by a reflected light. Should the reflectivity of the abovementioned percentage be decreased, a signal-contrast will then be decreased and the playback of an information will thus be difficult.

The recording media relating to the invention may also be heated in the presence of or in absence of oxygen if occasion demands. At this time, the preferable temperature range is in the order of 250 - 400°C.

Now, a recording medium relating to the invention will be concretely explained in reference to the exemplified embodiments shown in the drawings, and it is however to be understood that the invention is not limited to the specific constitution thereof.

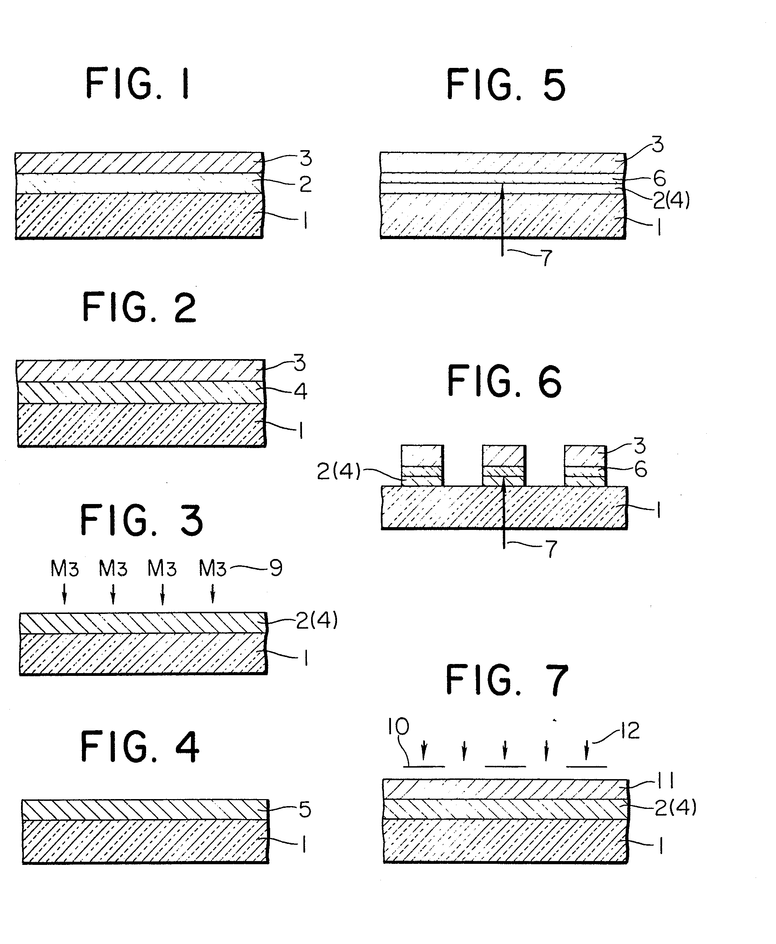

Referring to a recording medium prior to the physical development thereof, and in Fig. 1, reference numeral 1 indicates a support; 2 is a physical development nucleus layer in which physical development nuclei are dispersed in a hydrophilic protective colloidal layer thereof; and there is laminated over layer 2 with a metallic compound layer 3 in which a metallic compound is dispersed in the hydrophilic protective colloidal layer thereof. The recording medium shown in Fig. 2 is nearly the same as that shown in Fig. 1 and that shown in Fig. 2 has physical development nucleus layer 4 in which the physical development nuclei are not surrounded with hydrophilic protective colloid, that is a different point from the recording medium shown in Fig. 1. As shown in Fig. 3 it may also be allowed in the invention to supply metallic ion $M^+$,9 into physical development nucleus layer 2 or 4 from the outside of the nucleus layer for example from the physical development solution. As shown in Fig. 4, it is also possible in the invention to use a recording medium in which a hydrophilic colloidal layer 5 is provided so that physical development nuclei and a metallic compound can be dispersed over to support 1.

Everyone of the abovementioned recording media would become a recording medium relating to the invention after completing the physical development. Fig. 5 illustrates an instance where the medium shown in Fig. 1 or 2 was physically developed, and also illustrates the layer arrangement, wherein layer 6 containing a reflective component is formed in the vicinity of the interface between physical development nucleus layer 2 or 4 and metallic compound layer 3. In the layer 6, it may be presumed that metal atoms supplied from metallic compound layer 3 are diffused in a part of or the whole of layer 2 or 4 and then the metal atoms surround each physical development nuclei. Such layer 6 may also be allowed to permeate the whole of physical development nucleus layer 2 or 4.

When high density energy-beam 7 is irradiated from the direction of support 1 to thus obtained recording medium relating to the invention, the irradiated area of the layer 6 is molten or blown off to form pits and the reflectivity of layer 6 containing the reflective components are decreased and thus, it becomes possible to record. In this connection, it is possible to play back an information through the pits with an energy-beam whose intensity is relatively smaller than that of the energy-beam for recording by utilizing the reflectivity of the layer 6. (Such energy-beam for playback may be either of the same with and the different from the energy-beam for recording.) In the recording media relating to the invention, it is also allowed that, as shown in Fig. 6, physical development nucleus layer 2 or 4 onto which tracks have been formed reliefwise is physically developed and layer 6 containing a reflective component is formed in the vicinity of the interface between the physical development nucleus layer 2 or 4 and metallic compound layer 3.

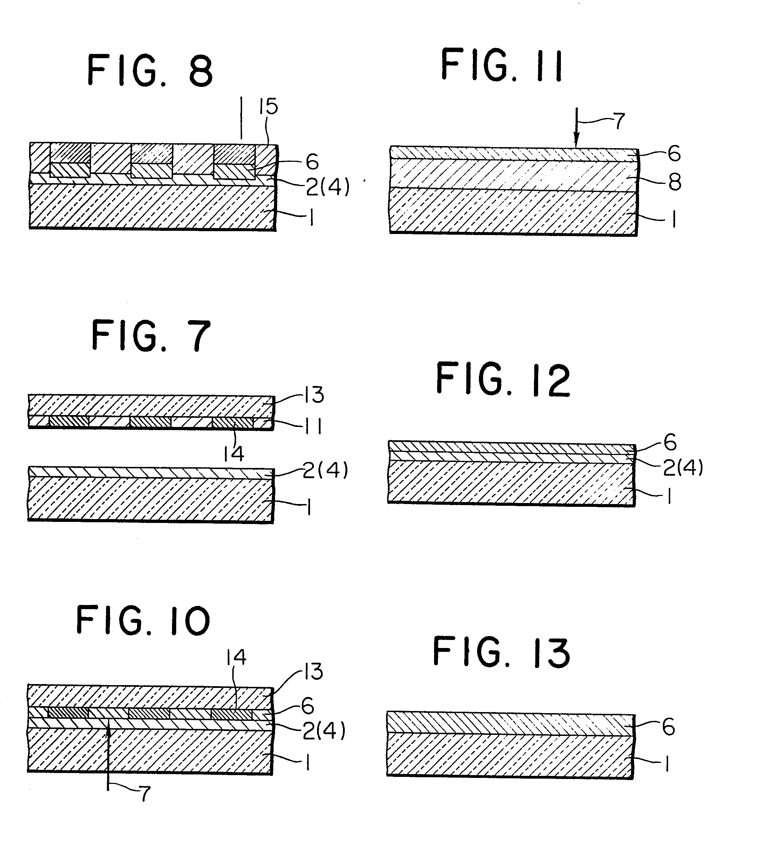

In the case that the medium shown in Fig. 3 is physically developed, as shown in Fig. 12, layer 6 containing a reflective component is formed on physical development nucleus layer 2 or 4, and it is also allowed to diffuse the reflective components into physical development nucleus layer 2.

In the case that the medium shown in Fig. 4 is physically developed, as shown in Fig. 13, the physical development nuclei are surrounded by the metal atoms and then the reflective components are diffused in physical development nucleus layer 2.

Fig. 7 illustrates a recording medium being provided with layer 11 containing a photosensitive metal compound, e.g.; a silver halide, copper halide and the like on physical development nucleus layer 2 or 4. Wherein, numeral 12 designates light.

Fig. 8 illustrates such a state that layer 6 having a reflectivity corresponding to pattern 10 is formed by physically developing the recording medium illustrated in Fig. 7. Wherein, numeral 15 designates a metal deposited through a reduction process.

In the invention, as shown in Fig. 9, it may also be allowed to constitute a recording medium so that photosensitive metal compound layer 11 may be provided on the other support 13 thereof and that the medium may have area 14 exposed patternwise to energy-beam. In this case, as shown in Fig. 10, an area having a metal compound layer not exposed to energy-beam will produce a reflectiveness when metal compound layer 11 shown in Fig. 9 and physical development nucleus layer 2 or 4 are closely attached together and are then physically developed.

Fig. 11 is a comparison diagram illustrating the substantial technique disclosed in Japanese Patent O.P.I. Publication No. 49296/1981 and 49297/1981, and wherein, 8 disignates a layer containing a blackened silver produced by reducing a silver halide emulsion.

In the invention, it may be allowed to delete the metal compound layer such as photosensitive metal compound layer provided on the layer containing the reflective component for example by washing with hot water after physical development.

The recording media relating to the invention are advantageous industrially in that neither protective layer coating process nor encapsulation process is necessary by contrast with the conventional types of recording media, because recording and playback may be performed through the support and the physical development nucleus layer. Therefore, the defects thereof may be relatively made fewer, the mass-production thereof may be suitably performed and the recording media may be supplied inexpensively.

Now, the following examples illustrate the invention, and not by way of limitation to the embodiments thereof:

Example 1

A gelatin dispersive aqueous solution of colloidal silver particles being served as physical development nuclei, the solution was prepared by reducing silver nitrate with dextrin, and the ratio of silver to gelatin was at 32% by weight and the average diameter of the colloidal particles was approximately 160Å. The solution prepared was coated over to an excellently plane and smooth glass plate which had been sublayered with a silane coupling reagent so that the dried thickness of the coat can be 1.5 μ by means of a wire-bar and thus a nearly colorless and transparent physical development nucleus layer having the transparency of 99% was provided. Then, onto the physical development nucleus layer, a fine-grain silver iodobromide gelatin emulsion of which silver iodide was 3 mol% and the average diameter thereof was 500Å, was coated to serve as a metallic compound so that the amount of silver can be 3 $g/m^2$, and thus the sample was obtained.

The sample was developed without exposing to light in the developer comprised as shown below at 30°C for one minute, and was then fixed and washed in an ordinary processes:

Developer

| Phenidone | 1.0 g |
| Anhydrous sodium sulfite | 65.0 g |
| Hydroquinone | 12.0 g |
| KOH | 15.0 g |
| KBr | 0.5 g |
| Sodium thiosulfate | 5.0 g |
| Add water to make | 1 ltr. |

It was confirmed by observing through the glass plate served as the support that there was produced a silver mirror having a metallic luster. The reflectivity of 27% was obtained at 633 nm through the glass plate. In this case, blackened silver was produced on the fine-grain silver iodobromide gelatin emulsion layer and, therefore the reflectivity thereof was exceedingly lower than that obtained through the glass plate.

Thus obtained sample of a recording medium relating to the invention was irradiated by He-Ne laser beam which was scanned at 3.3 m/sec by the use of a rotating mirror, and was modulated by the use of an acousto-optic modulator applied 500 nsec pulse signals, and whose diameter was 1.4 μm, and whose power was 20 mW at the surface of the medium, and then a recording was performed to form pits. Consequently the difference of the reflectivities between the recorded pit and unrecorded surface was remarkable so that an excellent signal contrast was obtained and an optical playback was easily possible. The value of the threshold energy estimated was about 0.15 $J/cm^2$ and the signal-to-noise ratio of the playback signal was 50 dB or higher.

Example 2

The sample relating to the invention having the layer having the reflectivity of a metallic luster was obtained in the similar manner to that taken in the case of Example 1, except that a physical development nucleus layer was coated with a gold colloidal solution comprising the composites given below to serve as the physical development nuclei so that the coated thickness thereof can be 0.1 μ. The reflectivity of 33% was obtained at 633 nm through a glass plate. A blackened silver was produced on the upper part of the fine grain silver iodobromide gelatin emulsion layer, and therefore the reflectivity thereof was exceedingly lower than that through the glass plate.

Aqueous solution of 1%
polyvinyl alcohol                                    10 ml

Aqueous solution of 0.2%
chloroaurate                                         50 ml

Aqueous solution of 1%
sodium borohydrate                                   10 ml

The above composed solution was mixedly stirred at room temperature and an aqueous solution of gold colloid was thus obtained.

To the recording medium sample relating to the invention thus obtained, the recording, and the reading-out were tried in the similar way to that taken in Example 1, and the excellent results were obtained similar to that obtained in Example 1.


Example 3

The sample relating to the invention having the layer having the reflectivity of a metallic luster was obtained in the similar manner to that taken in the case of Example 1, except that a physical development nucleus layer was coated with silver sulfide sol of the composites given below so that the coated thickness thereof can be 0.1 μ. The reflectivity of 37% was obtained at 633 nm through a glass plate. A blackened silver was produced on the upper part of the fine grain silver iodobromide gelatin emulsion layer, and therefore the reflectivity thereof was exceedingly lower than that through the glass support.

Composition of Solution A ——
$$AgNO_3 \qquad 0.85 \text{ g}$$
$$H_2O \qquad 200 \text{ cc}$$

Composition of Solution B ——
$$Na_2S \cdot 9H_2O \qquad 0.6 \text{ g}$$
$$\text{Saponin} \qquad 20 \text{ g}$$
$$H_2O \qquad 300 \text{ cc}$$

Silver sulfide sol was obtained by mixing the above-mentioned compositions A and B with stirring vigorously at room temperature.

To the recording medium sample relating to the invention thus obtained, the recording, and the reading-out were tried in the similar way to that taken in Example 1, and the excellent results were obtained similar to that obtained in Example 1.


Example 4

Physical development nucleus layers were obtained by vacuum evaporating various kinds of the metals each tabulated in Table 1 on a glass plate at $10^{-5}$ Torr., the thickness of the coat can be approximately 100Å, and the optical density thereof can be 0.1 - 0.3. Silver iodobromide gelatin emulsion of which the content of silver iodide was at 3 mol% and the average diameter of a nucleus was 0.1 μ, the emulsion was then coated on the physical development nucleus layer so that the amount of silver coated can be 2 g/m$^2$.

When the sample thus prepared was tried to physically developed without exposing to light in the same way taken in Example 1, then the reflectivity thereof was obtained through the glass plate as shown in Table 1.

Hardly any silver mirror was observed on the silver iodobromide gelatin emulsion layer of every sample. When the recording and reading-out were tried on the samples of the recording media relating to the invention through a glass plate, respectively, then the results were obtained as shown in Table 1. The signal-to-noise ratio of the playback signal was over 50 dB, at this time.

Table 1

| Metals evaporated | Reflectivity (633 nm) (%) | Threshold value of recording energy (J/cm$^2$) |
|---|---|---|
| Au | 74 | 0.35 |
| Ag | 68 | 0.32 |
| Pd | 45 | 0.25 |
| Cu | 30 | 0.18 |

Example 5

The sample of the recording media relating to the invention was prepared in the similar way to that taken in Example 1, except that polymethyl methacrylate of 1.0 mm in thickness was used to serve as the support of the sample, and the recording and reading-out were tried thereon in the similar way to that taken in Example 1. The results therefrom were that the threshold value of the energy for recording, was 0.10 $J/cm^2$ and the signal-to-noise ratio for playback signal was over 50 dB.

Example 6

When each of the samples prepared respectively in the aforegiven Example 1 through 4 was physically developed similarly to the case of Example 1, except that each of the samples was exposed to light from the side of the silver iodobromide gelatin emulsion layer thereof through a pattern with the amount exposed of 200 CMS by means of Photosensitometer, Model KS-7B mfd. by Seiki Kogyo Co., then the reflectivity thereof through a glass plate was relatively lowered in the exposed areas and the silver mirror could be formed patternwise. The reason thereof may be presumed that production of the silver mirror was inhibited in an exposed area and a chemical development was progressed to produce a blackened silver. The reflectivity of each sample measured at 633 nm was tabulated in Table 2.

Table 2

| Sample | | Unexposed Area (%) | Exposed Area (%) |
|---|---|---|---|
| Example 1 | | 27 | 13 |
| Example 2 | | 33 | 15 |
| Example 3 | | 37 | 23 |
| Example 4 | Au | 74 | 42 |
| | Ag | 68 | 30 |
| | Pd | 45 | 22 |
| | Cu | 30 | 6 |

As is obvious from the results shown above, it was found in the recording media relating to the invention that tracks or other necessary information can be recorded photographically in advance on the recording media if occasion demands. It is also found that any necessary reflectivity may be arbitrarily applied to the recording media relating to the invention by means of exposure, development or the like.

The abovementioned findings are important for regulating an energy for recording arbitrarily, and it is greatly meaningful that the threshold value of the energy for recording was relatively lowered in every sample used in Examples 1 through 4.

Example 7

Onto the physical development nucleus layer of the sample used in Example 4, and in place of the silver iodobromide emulsion layer on the metallic compound layer, there was coated with an emulsion layer whose principal component was a photosensitive copper halide comprising Cu 0.97, Ag 0.03, Br 0.9 and I 0.1 for those of which gelatin was used as the binding agent so that the dried thickness thereof could be 3 μ, and the sample thus prepared was developed by a methol-L-ascorbic acid type developer at room temperature for ten minutes without any exposure to light. As the results therefrom, it was observed that a beautiful copper mirror seen through a glass plate was obtained and that metallic copper was reduced and deposited on the upper part of the copper halide emulsion layer.

When the sample thus developed was tried to record and play back in the similar way to that taken in Example 1, it was possible to record thereon at the threshold value of energy in the order of 0.2 J/cm$^2$ and to obtain the value of not lower than 40 dB at the S/N ratio for playback.

Example 8

The physical development nucleus layer was provided on the glass plate in the same manner as that taken in the case of Example 1, except that the colloidal particles having the average diameter of 350Å were used and the gelatin dispersive aqueous solution of colloidal silver was coated so that the dried thickness of the coat can be 1.0 μ. The transparency of the physical development nucleus layer thus obtained was 58% at 633 nm. And a recording medium was obtained in the same manner as in Example 1. The reflectivity of 23% was obtained at 633 nm through a glass plate. The signal-to-noise of the playback signal was about 40 dB.

Comparative Example 1

The physical development nucleus layer out of the invention was provided on the glass plate in the same manner as in Example 1, except that the colloidal particles having the average diameter of 550Å were used and the gelatine dispersive solution of colloidal silver was coated so that the dried thickness of the coat can be 1.0 μ. The transparency of the physical development nucleus layer thus obtained was 42% at 633 nm. And a recording medium was obtained in the same manner as in Example 1. The reflectivity of 13% was obtained at 633 nm through a glass plate. The signal-to-noise of the playback signal was 35 dB or lower.

Comparative Example 2

The physical development nucleus layer out of the invention was provided on the glass plate in the same manner as in Example 1, except that the colloidal particles having the average diameter of 700Å were used and the gelatine dispersive solution of colloidal silver was coated so that the dried thickness
of the coat can be 1.0 μ. The transparency of the physical
development nucleus layer thus provided was 28% at 633 nm.
And a recording medium was obtained in the same manner as in
Example 1. The reflectivity of 10% was obtained. The signal-
to-noise of the play back signal of this recording medium was
30 dB or lower. This could not be used practically.

Brief description of the drawings:

Fig. 1 through 4, Fig. 7 and Fig. 9 are the schematically
cross-sectional diagrams showing respectively the examples of
the recording media relating to the invention; Fig. 5, Fig. 6,
Fig. 8, Fig. 10, Fig. 12 and Fig. 13 are the schematically
cross-sectional diagrams showing respectively the above-given
examples which were physically developed; and Fig. 11 is a
schematically cross-sectional diagram showing a comparative
example thereof; and wherein, 1 is a support; 2 and 4 are physical development nucleus layers, respectively; 3 is a metallic
compound layer; 5 is a hydrophilic colloidal layer dispersed
therein with physical development nuclei and a metallic compound; 6 is a layer containing a reflective component; 7 is a
high-density energy-beam; 8 is a gelatin layer dispersed therein with blackened silver; 9 is a metallic ion supplied from an
external metal or a metallic compound; 10 is a pattern; 11 is
a photosensitive metallic compound layer; 12 is an energy-beam for exposing a photosensitive metallic compound layer thereto; 13 is a support; 14 is the photoexposed area of a photosensitive metallic compound; and 15 is the photoexposed and then developed area of a photosensitive metallic compound.

CLAIMS:

1. A recording medium comprising a layer containing a reflective component provided on a support characterized in that the reflectivity of the layer is decreased by irradiation through said support with an energy beam, said support being transparent to said energy beam and said layer being formed by physical development in the presence of metal ions of a layer of physical development nuclei provided on said support and having a transparency to said energy beam of not less than 50%.

2. A recording medium according to Claim 1, characterized in that the reflective component comprises the physical development nuclei and metal atoms formed by reducing said metal ions.

3. A recording medium according to Claim 1 or 2 characterized in that the metal ions are supplied from a gold, silver, nickel or cobalt salt.

4. A recording medium according to any preceding Claim, characterized in that the layer containing the reflective component has a reflectivity of 20 to 60% through said support.

5. A recording medium according to any preceding Claim, characterized in that the physical development nuclei have an average diameter of 20 to 500Å.

6. A method for the production of a recording medium comprising a layer containing a reflective component provided on a support in which the reflectivity of the layer is decreased by irradiation with an energy beam through said support to said layer, characterized in that a layer of physical development nuclei provided on said support is subjected to physical development in the presence of metal ions, said support being transparent to said energy beam and said layer of physical development nuclei having a transparency to said energy beam of not less than 50%.

7. A method according to Claim 6, characterized in that the recording medium further comprises a layer supplying metal ions to said layer of physical development nuclei.

8. A method according to Claim 6 or 7 characterized in that the metal ions are supplied from a gold, silver, nickel, or cobalt salt.

9. A method according to any of Claims 6 to 8 characterized in that the layer containing the reflective component has a reflectivity of 20 to 60% through said support.

10. A method according to any of Claims 6 to 9 characterized in that the physical development nuclei have an average diameter of 20 to 500Å.

# FIG. 1

3
2
1

# FIG. 2

3
4
1

# FIG. 3

M3　M3　M3　M3 — 9
2(4)
1

# FIG. 4

5
1

# FIG. 5

3
6
2(4)
1
7

# FIG. 6

2(4)
3
6
1
7

# FIG. 7

10
12
11
2(4)
1

# FIG. 8

15
6
2(4)
1

# FIG. 11

7
6
8
1

# FIG. 7

13
11
14
2(4)
1

# FIG. 12

6
2(4)
1

# FIG. 10

14
13
6
2(4)
1
7

# FIG. 13

6
1